# EUROPEAN PATENT SPECIFICATION

(11) **EP 1 712 902 B1**
(45) Date of publication and mention of the grant of the patent: **10.11.2010**
(21) Application number: 06007586.8
(22) Date of filing: 11.04.2006
(51) Int. Cl.: G01N 27/407

(54) **Limiting current type gas sensor and use thereof**
Grenzstromgassensor und Verwendung dafür
Détecteur de gaz de type à courant limité et utilisation de celui-ci

(30) Priority: 14.04.2005 JP 2005117392; 13.02.2006 JP 2006035459
(43) Date of publication of application: 18.10.2006
(73) Proprietor: KABUSHIKI KAISHA TOYOTA CHUO KENKYUSHO, Aichi-gun, Aichi-ken, 480-1192 (JP)
(72) Inventor: Inaba, Tadashi K.K. Toyota Chuo Kenkyusho, Aichi-gun Aichi-ken 480-1192 (JP); Saji, Keiichi K.K. Toyota Chuo Kenkyusho, Aichi-gun Aichi-ken 480-1192 (JP); Sakata, Jiro K.K. Toyota Chuo Kenkyusho, Aichi-gun Aichi-ken 480-1192 (JP)
(74) Representative: Kramer - Barske - Schmidtchen

(56) References cited:
- DE-A1- 4 408 504
- US-A- 4 547 281
- US-A- 5 630 920
- US-A1- 2002 023 838
- PATENT ABSTRACTS OF JAPAN vol. 2003, no. 12, 5 December 2003 (2003-12-05) & JP 2004 198369 A (MATSUSHITA ELECTRIC IND CO LTD), 15 July 2004 (2004-07-15)

## Description

The present invention relates to a gas sensor. In particular the invention relates to air-fuel ratio sensors. The invention also relates to a method of controlling a device using this gas sensor. Also, the invention relates to a combination of a gas sensor and a device that receives a signal from this gas sensor.

Limiting current type gas sensors are employed as for example oxygen concentration meters, sensors used to construct an air-fuel ratio measurement system for an automobile, sensors used in a purification system for exhaust gas that is discharged from an engine, or sensors used in the system whereby fuel is supplied to the engine. Platinum (Pt) is employed for the electrodes of gas sensors utilized in such applications. Platinum has high catalytic activity, and in the atmosphere containing oxygen and combustible gas originating from for example fuel in an automobile, this catalytic action of platinum causes the combustible gas to react with the oxygen. Such reaction of the combustible gas with the oxygen, makes it difficult for a limiting current type gas sensor to measure accurately the concentration of the oxygen in this atmosphere.

When a limiting current type gas sensor is employed as an air-fuel ratio sensor, there are problems apart from the effect produced by the reaction of the combustible gas with the oxygen. These problems are indicated below.

In a conventional air-fuel ratio sensor utilizing a limiting current type gas sensor, it was necessary to arrange one electrode in the external atmosphere, in order to measure continuously air-fuel ratios ranging from an atmosphere in which oxygen is in excess (hereinbelow referred to as a "lean atmosphere") to an atmosphere in which fuel is in excess (hereinbelow referred to as a "rich atmosphere"). It was therefore necessary that a gas sensor should be provided with an external atmosphere chamber: this presented an obstacle to miniaturizing the gas sensor (air-fuel ratio sensor). Laid-open Japanese Patent Application No. 2004-198369 discloses a gas sensor of the limiting current type which is not provided with an external atmosphere chamber. However, it is difficult to a measure continuously the air-fuel ratio from a lean atmosphere to a rich atmosphere with this gas sensor.

Laid-open Japanese Patent Application No. H.8-510561 discloses a gas sensor that measures oxygen concentration without being subject to the effect of combustible gas, by addition of bismuth to the electrode. This gas sensor is of a type in which the electromotive force generated by difference of oxygen concentration is detected. The output from this gas sensor cannot therefore be in a linear relationship with the concentration of oxygen in the atmosphere and it is necessary to provide this gas sensor with a correction circuit in order to measure accurately the concentration of oxygen using this gas sensor. In fact, it is difficult to measure the concentration of oxygen using this gas sensor in a simple manner.

US 5,630,920 discloses an electrochemical sensor for determining the oxygen concentration in a gas mixture, wherein the sensor has a solid electrolyte with oxygen ionic conductivity, which has a measuring electrode that does not catalyze the establishment of equilibrium of the gas mixture and is exposed to the gas mixture, wherein the measuring electrode contains platinum and bismuth.

US 2002/0023838 A1 discloses a gas sensor, wherein the gas sensor has a solid electrolyte having at least one measuring electrode and one porous protective coating, wherein the measuring electrode has an electrically conductive base layer and a further layer, wherein the further layer may contain bismuth and is deposited in the pores of the porous protective coating adjacent to the base layer.

DE 44 08 504 A1 relates to a gas sensor having a solid electrolyte with a measuring electrode, wherein the measuring electrode includes bismuth.

The present invention solves at least one of the problems relating to a limiting current type sensor as described above. According to the present invention, there is provided an electrode capable of detecting oxygen gas contained in the gas to be measured without being affected by combustible gas that is mixed therewith. As a result, this gas sensor provides a technique whereby oxygen concentration can be accurately detected. The present invention provides a technique whereby it is possible to measure continuously and with high accuracy the air-fuel ratio in the range from lean atmosphere to rich atmosphere using a gas sensor. A method of controlling a device using the gas sensor disclosed by the present invention is also provided. Also, the present invention relates to a combination of the gas sensor disclosed by the present invention and a device for receiving signals from this gas sensor.

The air-fuel ratio sensor according to the present invention is a gas sensor that detects a limiting current value and comprises a solid electrolyte, a gas diffusion rate control member, an inner electrode, and an outer electrode.
The solid electrolyte has oxygen ion conductivity.
The gas diffusion rate control member can limit the diffusion rate of a surrounding gas (detected gas).
The inner electrode is arranged at the inside surface of the solid electrolyte that is in an inner space covered by said gas diffusion rate control member.
The outer electrode is arranged at the outside surface of the solid electrolyte that is outside said inner space.
The inner electrode and outer electrode are made of metal particles, the primary material of the metal particles being at least one metal element selected from a group consisting of metals belonging to the platinum group, gold, silver and nickel, wherein said inner electrode contains no bismuth, i.e. only the metal particles forming the outer electrode contain bismuth. The metal particles forming the outer electrode contain bismuth and a bismuth rate of a surface portion of the metal particles is higher than a bismuth rate of an inner central portion of the metal particles.

The expression "the electrode is made of metal particles" is intended to cover not merely the case where "the electrode is an aggregate of metal particles", but also the case where the electrode "comprises metal particles agglomerated by for example sintering" or the case where "an originally uniform metal film is made porous".

Also, the expression "the metal particles contain rich bismuth at the outer surfaces and contain poor or no bismuth within the interior of the metal particles" is intended to cover the case where "bismuth is contained at the respective surfaces of the metal particles (for example platinum particles) that are agglomerated to constitute the electrode" or the case where "comparing the surface portion of the metal particles and the portions other than the surface portion (for example the central portion in the interior of the particles), the bismuth rate of the surface portion is higher (i.e. bismuth is contained in higher concentration at the outer surface of the metal particles and scarcely any bismuth is contained in the interior of the metal particles)".

As a result of the fact that in the outer electrode of the limiting current type gas sensor, "a bismuth rate of a surface portion of the metal particles is higher than a bismuth rate of an inner central portion of the metal particles", the catalytic action of the electrode can be greatly reduced by the presence of bismuth (usually present in the form of bismuth oxide) at the surface of the metal particles. The limiting current type gas sensor is utilized as an air-fuel ratio sensor that measures the air-fuel ratio utilizing oxygen ion conductivity.

The inner electrode can be formed of metal particles having platinum as the primary material.
Platinum is an element of excellent electrical conductivity and can enable excellent electrical properties of the inner electrode to be maintaind.

The inner electrode can also be formed of metal particles having gold as the primary material. Also, the inner electrode can be formed of metal particles having gold as the primary material and metal particles having platinum and/or palladium as the primary material. In the latter case, the rate of platinum and/or palladium with respect to the total mass of the metal elements constituting the inner electrode is preferably no more than 10 wt%.

Gold is an element of excellent electrical conductivity and can suppress the catalytic action of the inner electrode while maintaining excellent electrical properties of the inner electrode. The oxygen pump performance of the limiting current type gas sensor can be improved by mixing metal particles having platinum as the primary material and/or palladium with metal particles having gold as the primary material. In addition, adhesion between the solid electrolyte and inner electrode can be increased. If the rate of platinum and/or palladium is high, the catalytic action of the electrode cannot be suppressed to any great extent. If the rate of platinum and/or palladium is no more than 10 wt%, the drawbacks can be suppressed and the advantages augmented.

According to the present invention, both the inner electrode and the outer electrode are formed of metal particles having at least one metal element selected from a group consisting of all metals belonging to the platinum group, gold, silver and nickel as the primary material.

According to the gas sensor of the present invention, the electrode does not contain bismuth at the outer surface of the metal particles that constitute the inner electrode. Furthermore, the outer electrode is made of metal particles, where the primary material of the metal particles is at least one metal element selected from a group consisting of metals belonging to the platinum group, gold, silver and nickel and contains bismuth at the outer surface of the metal particles.

With a gas sensor according to the present invention, bismuth is not contained in the inner electrode arranged in the zone where the diffusion rate of the gas to be measured is restricted by the gas diffusion rate control member. As a result, the phenomenon of lowering of oxygen gas concentration by the catalytic action of the inner electrode can be positively utilized. On the other hand, since bismuth is contained at the outer surface of the metal particles constituting the outer electrode, the catalytic action of the outer electrode is reduced. Even in the case where the outer electrode is arranged in a surrounding gas atmosphere containing combustible gas, the outer electrode is unaffected by the combustible gas, so the gas sensor can maintain a potential corresponding to the oxygen gas concentration.

For the above reasons, a gas sensor according to the present invention can be effectively utilized as an air-fuel ratio sensor of the limiting current type. Also, with a gas sensor according to the present invention, accuracy of measurement of the air-fuel ratio can be achieved without providing the gas sensor with an external atmosphere chamber.

Preferably the bismuth rate of the outer electrode is 0.1 to 15 wt% with respect to the total mass of metal elements constituting the outer electrode.

By setting the bismuth rate of the outer electrode in the above range, the air-fuel ratio can be measured with high accuracy while maintaining excellent electrical properties of the outer electrode.

The outer electrode (bismuth-containing electrode) of the gas sensor can also be formed of metal particles whose primary material is platinum.

Platinum is an element of excellent electrical conductivity and can enable excellent electrical properties of the electrode to be maintained.

The outer electrode (bismuth-containing electrode) of the gas sensor can be formed of metal particles having gold as the primary material. Also, the outer electrode can be formed of metal particles having gold as the primary material and metal particles having platinum and/or palladium as the primary material. In the latter case, the rate of platinum and/or palladium with respect to the total mass of the metal elements constituting the outer electrode is preferably no more than 10 wt%.

Gold is an element of excellent electrical conductivity and can suppress the catalytic activity of the electrode while maintaining excellent electrical properties of the electrode. The oxygen pump performance of the limiting current type gas sensor can be improved by mixing metal particles having platinum as the primary material and/or palladium with metal particles having gold as the primary material. In addition, adhesion between the solid electrolyte and inner electrode can be increased. If the rate of platinum and/or palladium is high, the catalytic action of the electrode cannot be suppressed to any great extent. If the rate of platinum and/or palladium is no more than 10 wt%, the drawbacks can be suppressed and the advantages augmented.

With the gas sensor according to this embodiment, the air-fuel ratio can be measured.

With the gas sensor according to this embodiment, bismuth is not contained in the inner electrode arranged in the zone where the diffusion rate of the gas to be measured is restricted by the gas diffusion rate control member. As a result, the phenomenon of lowering of oxygen gas concentration by the catalytic action of the inner electrode can be positively utilized. On the other hand, since bismuth is contained at the outer surface of the metal particles constituting the outer electrode, the catalytic action of the outer electrode is reduced. Even in the case where the outer electrode is arranged in a surrounding gas atmosphere containing combustible gas, the outer electrode is unaffected by the combustible gas, so the gas sensor can maintain a potential corresponding to the oxygen gas concentration. In particular, since the metal particles that are the primary material of the outer electrode are made of gold, the electrical properties of the outer electrode can be very satisfactorily maintained. In addition, adhesion between the solid electrolyte and electrode can be increased by using a small quantity of platinum and/or palladium.

Also, the present invention provides a combination of any gas sensor of the limiting current type as described above with a control unit that receives the detection signal from the gas sensor. Usually, the gas sensor comprises a power source that applies a prescribed voltage and also comprises a control unit that inputted a detection signal (current value) from this gas sensor.

Also, the present invention, present invention provides the use of the above-defined gas sensor for controlling various types of device in accordance with the detection signal from any limiting current type gas sensor as described above.

Specifically, one preferred use disclosed in the present invention is the use with an exhaust gas purification system. This exhaust gas purification system comprises a limiting current type gas sensor provided in the exhaust system (exhaust pipe) of an engine as an air-fuel ratio sensor and a control unit that controls the condition of exhaust gas purification processing of an exhaust emission control system, provided in the exhaust system, based on detection signal from the gas sensor.

In this connection "the condition of exhaust gas purification processing of an exhaust emission control system is controlled" means that the content of exhaust gas purification processing is changed by the control unit. For example, "the condition of exhaust gas purification is controlled" in this embodiment means for example adjustment of the amount of reducing agent (agent for reducing NOx) added to the exhaust emission control system (usually catalyst), flow rate adjustment of the gas flowing through the exhaust emission control system, or alteration of the flow path through which the exhaust gas flows (for example by opening/closing a valve).

With the system of the present embodiment, it is possible to perform effective purification processing of exhaust gas by employing a limiting current type gas sensor as disclosed in the present invention as an air-fuel ratio sensor.

Also, a gas sensor according to the present invention can be employed in a fuel supply system in which fuel is supplied in accordance with the air-fuel ratio of the exhaust gas. Such a fuel supply system comprises a limiting current type gas sensor provided in the exhaust system of an engine as an air-fuel ratio sensor, the rate of supply of fuel supplied to the engine being controlled in accordance with the detection signal from this gas sensor.

When a gas sensor according to the present invention is employed as a fuel supply system, the air-fuel ratio can be measured with high accuracy in continuous fashion ranging from a lean atmosphere to rich atmosphere (or from rich atmosphere to lean atmosphere), so the rate of supply of fuel to the engine can be optimized.
FIG. 1 shows diagrammatically an embodiment of a limiting current type gas sensor according to the present invention and its constituent components;
FIG. 2 shows diagrammatically an embodiment of a limiting current type gas sensor according to the present invention (laminated type gas sensor);
FIG. 3 shows diagrammatically an embodiment of a limiting current type gas sensor according to the present invention (thin-film gas sensor);
FIG. 4 shows diagrammatically a comparative example of a limiting current type gas sensor (thin-film gas sensor);
FIG. 5 shows diagrammatically an example of a fuel supply system constructed using a limiting current type gas sensor according to the present invention;
FIG. 6 shows diagrammatically an example of an exhaust gas purification system constructed using a limiting current type gas sensor according to the present invention
FIG. 7 is a graph showing a gas detection characteristic (current-voltage characteristic) of a limiting current type gas sensor according to a comparative example, the voltage (V) being shown along the horizontal axis and the current (mA) being shown along the vertical axis;
FIG. 8 is a graph showing a gas detection characteristic (current-voltage characteristic) of a limiting current type gas sensor according to a comparative example, the voltage (V) being shown along the horizontal axis and the current (mA) being shown along the vertical axis;
FIG. 9 is a graph showing a gas detection characteristic (current-voltage characteristic) of a limiting current type gas sensor according to a comparative example, the voltage (V) being shown along the horizontal axis and the current (mA) being shown along the vertical axis;
FIG. 10 is a graph showing a gas detection characteristic (current-voltage characteristic) of a limiting current type gas sensor according to an embodiment, the voltage (V) being shown along the horizontal axis and the current (mA) being shown along the vertical axis;
FIG. 11 is a graph showing a gas detection characteristic (current-voltage characteristic) of a limiting current type gas sensor according to a comparative example, the voltage (V) being shown along the horizontal axis and the current (mA) being shown along the vertical axis;
FIG. 12 is a graph showing the oxygen pump characteristic (current-voltage characteristic) produced by addition of bismuth to a structural component according to a comparative example, the voltage (V) being shown along the horizontal axis and the current (mA) being shown along the vertical axis;
FIG. 13 is a graph showing the current decreasing rate depending on the type of inner electrode of a limiting current type gas sensor according to a comparative example, the type of electrode being shown along the horizontal axis and the current decreasing rate (%) being shown along the vertical axis;
FIG. 14 is a graph showing the gas detection characteristic (current-voltage characteristic) of a limiting current type gas sensor according to a further embodiment, the voltage (V) being shown along the horizontal axis and the current (mA) being shown along the vertical axis;
FIG. 15 is a graph showing the gas detection characteristic (current-voltage characteristic) of a limiting current type gas sensor according to a further embodiment, the voltage (V) being shown along the horizontal axis and the current (µA) being shown along the vertical axis; and
FIG. 16 is a graph showing the gas detection characteristic (current-voltage characteristic) of a limiting current type gas sensor according to a further embodiment, the voltage (V) being shown along the horizontal axis and the current (µA) being shown along the vertical axis.

### Preferred Embodiments

Preferred embodiments of the present invention are described below. It should be noted that matters that are necessary for implementation of the present invention (such as for example the method of forming a sensor including a solid electrolyte (ceramic) or the construction of a control unit for the system construction), other than items that are specifically referred to in the present specification (such as for example the construction of the gas sensor), can be understood as items that may be designed by a person skilled in the art based on the prior art in the field in question. The present invention can be implemented using the matter disclosed in the present specification and the drawings and technical common knowledge in the field in question.

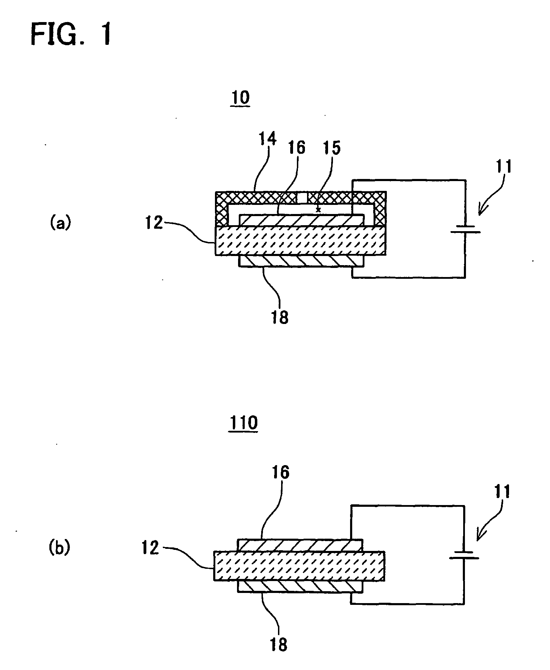

Embodiments of the present invention are described with reference to the drawings. Figure 1 shows diagrammatically the basic construction of the gas sensor disclosed in the present invention. A limiting current type gas sensor 10 is constructed of a solid electrolyte 12, gas diffusion rate control member 14 and a pair of electrodes 16, 18. The solid electrolyte 12 has oxide ion conductivity. The gas diffusion rate control member 14 is formed on one face of the solid electrolyte 12. The pair of electrodes 16, 18 respectively make electrical contact with both faces of the solid electrolyte 12.

One electrode (the inner electrode) 16 is formed in an interior space 15 surrounded by the gas diffusion rate control member 14. Specifically, this electrode constitutes a detection electrode that is formed in a zone (interior space 15) where the diffusion rate of the surrounding gas is restricted. The other electrode (outer electrode) 18 is formed outside the zone (interior space 15) where the diffusion rate of the surrounding gas is restricted, and constitutes the counter electrode of the detection electrode (inner electrode) 16. An external power source 11 is connected with both electrodes 16, 18, so that when prescribed voltage is applied between the two electrodes, oxide ions (O²⁻) migrate from the inner electrode 16 to the outer electrode 18, generating a current (detection current) between the two electrodes. At this time, diffusion of gas to the inner electrode 16 is restricted by the gas diffusion rate control member 14, so the value of the current between the two electrodes is proportional to the concentration of oxygen gas in the gas that is being measured.

The solid electrolyte 12 corresponds to the substrate of the gas sensor 10. There are no particular restrictions on the solid electrolyte 12 that may be used, so long as it possesses oxide ion conductivity. Examples of solid electrolyte 12 that may be mentioned include zirconia based solid electrolytes (typically, ZrO₂-M₂O₃ solid solutions or ZrO₂-MO solid solutions: where M is preferably yttrium (Y), ytterbium (Yb), gadolinium (Gd), calcium (Ca) or magnesium (Mg)), ceria based solid electrolytes (typically, CeO₂-M₂O₃ solid solutions or CeO₂-M solid solutions: where M is preferably yttrium or samarium (Sm)) or LaGaO₃ type compounds of perovskite structure. When measuring exhaust gas from the engines of for example automobiles, from the point of view of stability and oxide ion conductivity, the solid electrolyte is preferably a zirconia based solid electrolyte. Stabilized zirconias containing in solid solution 3 to 10 mol% of yttria, magnesia or calcia with respect to the solid electrolyte are particularly preferred.

There is no particular restriction regarding electrodes employed in the gas sensor 10 but unrelated to the present invention, so long as such electrodes are constituted of conductive material. However, such electrodes are preferably made of a substance (such as for example platinum) that is stable even in an atmosphere containing a comparatively large amount of water vapor at high temperature, such as exhaust gas after combustion. On the other hand, the electrode that is constituted by metal particles in which a bismuth rate of a surface portion of the metal particles is higher than a bismuth rate of an inner central portion of the metal particles (electrode disclosed in the present invention), is preferably made of a metal of comparatively high melting point. Examples of such metals that may be given include platinum group elements (typically, platinum, palladium, rhodium, iridium), precious metals other than these (gold or silver), or nickel, which is a base metal of high conductivity. Alloys based on these metals may also be employed. Examples that may be given include alloys based on platinum (for example platinum/rhodium or platinum/iridium).

The electrodes that are provided in a limiting current type gas sensor as disclosed in the present invention may be formed by the same techniques as the techniques used for forming electrodes in conventional gas sensors. For example, a paste (or ink) for electrode formation containing particles of metal such as platinum in powder form may be applied to the surface of a solid electrolyte 12 of prescribed shape and thickness by a screen printing method or the like. After this, the solid electrolyte 12 is sintered at a suitable sintering temperature (for example 800 to 1600 °C). The metal particles in the paste are thereby sintered to form electrodes 16, 18 of the prescribed shape and thickness.

The electrode 18 contains bismuth in a concentration (which may also be expressed as a rate) necessary in order to suppress or reduce the catalytic action of the electrode. Specifically, in the metal particles forming the outer electrode a bismuth rate of a surface portion of the metal particles is higher than a bismuth rate of an inner central portion of the metal particles. Preferably the bismuth rate (i.e. the mass of Bi/the total mass of the metal elements constituting the outer electrode, including Bi; this definition also applies hereinbelow) of the outer electrode 18 is about 0.1 to 15 wt%, since bismuth can easily vaporize from the outer electrode 18 due to the effect of for example high temperature. In particular, about 1 to 10 wt% is preferable.

Since, in the gas sensor 10, the metal particles forming the outer electrode contain bismuth as explained above, the desired reduction (or suppression) of catalytic action can be achieved even if the bismuth rate is comparatively low.

Regarding the method of producing metal particles forming the outer electrode that contains bismuth as explained above, there are no particular restrictions, but preferably a bismuth compound is supplied to the surface of the electrode constituted of metal particles (for example a platinum electrode in the form of sheet) and this electrode is then heated (sintered). Usually, a composition (typically, an aqueous solution) containing the bismuth compound (for example bismuth nitrate) is applied or dropped onto the surface of the electrode. The electrode is then heated to about 700 to 1000 °C. By this method, a layer of bismuth (typically, bismuth oxide) is formed at the surface of the metal particles constituting the electrode. Also, with this method, usually, no bismuth is present in the interior (vicinity of the center) of the metal particles. Consequently, as a preferred mode of the present invention, a limiting current type gas sensor is provided comprising an outer electrode wherein a layer of bismuth (typically, bismuth oxide) is formed at the surface of the metal particles, but substantially no bismuth is contained in the interior (vicinity of the center) of the metal particles.

Alternatively, a metal material for forming the electrode which is mixed beforehand with a bismuth compound is sintered at a prescribed temperature. With this method, metal particles forming the electrode that contains bismuth as explained above can be produced by vaporization when the bismuth is sintered.

The gas diffusion rate control member 14 that is provided in the gas sensor 10 may be the same as that employed in a conventional gas sensor (for example oxygen sensor). For example, the gas diffusion rate control member 14 is preferably constituted by a heat-resistant porous member whereby the diffusion rate of gas can be controlled (for example a ceramic porous member such as alumina or silica).

There is no particular restriction regarding for example the shape (external diameter) or size of the limiting current type gas sensor, or regarding the shape of the gas concentration measurement device constructed of this gas sensor. The gas sensor and gas concentration measurement device can be made of various shapes in accordance with the object or application.

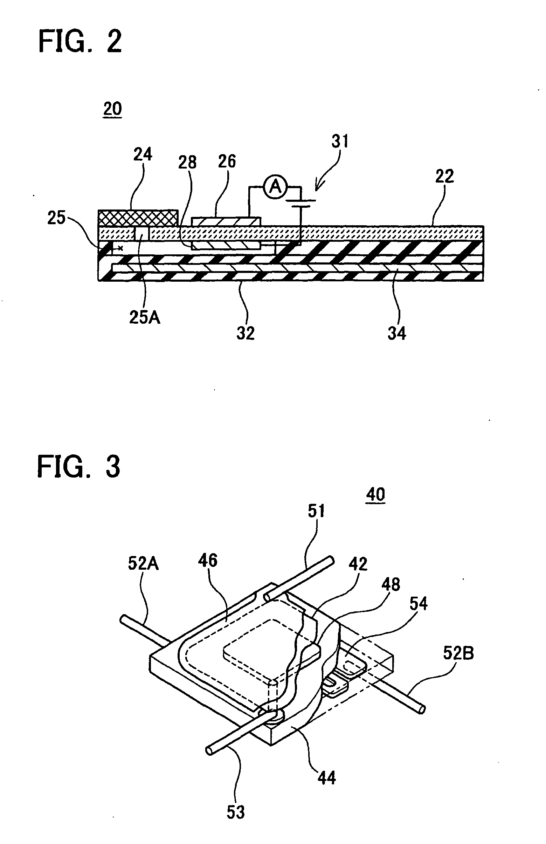

An example of an air-fuel ratio measurement device will be described with reference to the drawings. Figure 2 shows a gas measurement device 20 comprising sensor as disclosed in the present invention. The measurement device 20 comprises a thin plate type insulating sheet 32 formed of for example alumina and a thin plate type solid electrolyte 22 (for example yttria stabilized zirconia) formed on the surface of the insulating sheet 32. The measurement device 20 is a device obtained by laminating an insulating sheet 32 and solid electrolyte 22. A space 25 is formed between the solid electrolyte 22 and insulating sheet 32. A gas introduction hole 25A for introducing the gas to be measured into the space 25 is formed in the solid electrolyte 22. A thin plate type gas diffusion rate control member (for example porous alumina) 24 is formed at the surface of the solid electrolyte 22 in order to block the gas introduction hole 25A, in order to restrict the gas diffusion rate into the interior space 25 from the gas introduction hole 25A.

A pair of electrodes (for example Pt electrodes) 26, 28 is formed sandwiching this solid electrolyte 22. These two electrodes 26, 28 are connected with an external circuit 31 comprising for example a power source and current meter. Prescribed voltage can thereby be applied between the electrodes 26, 28, enabling this measurement device 20 to function as a limiting current type gas sensor. Preferably, a suitable heater 34 is formed at the surface of or embedded in the insulating substrate 32. In this way, gas concentration measurement can be conducted at a desired temperature (for example 500 °C or more).

Bismuth is included in the surface of the platinum particles constituting the electrode 26 (the platinum particles contain bismuth as explained above) arranged outside the space 25, with substantially no bismuth included in the surface of the metal particles constituting the electrode 28 that is arranged in the interior of the space 25; in this way, the measurement device 20 can achieve accurate measurement of the air-fuel ratio of the surrounding gas. Specifically, the catalytic action of the electrode 28 is positively employed. The air-fuel ratio can be determined by changing the value of the current that flows between the two electrodes in accordance with the rate of combustible gas contained in the surrounding gas that is introduced into the space 25. In this case, the catalytic action of the electrode 26 is reduced (suppressed) by the bismuth (typically, bismuth oxide) that is present at the surface of the platinum particles. In this way, even if the electrode 26 is arranged in atmosphere including combustible gas, a potential corresponding to the oxygen concentration and unaffected by the combustible gas can be maintained. Consequently, the air-fuel ratio sensor of the present invention does not need to be provided with an external atmosphere chamber as does the conventional air-fuel ratio sensor. An air-fuel ratio measurement device of simple construction can thereby be provided.

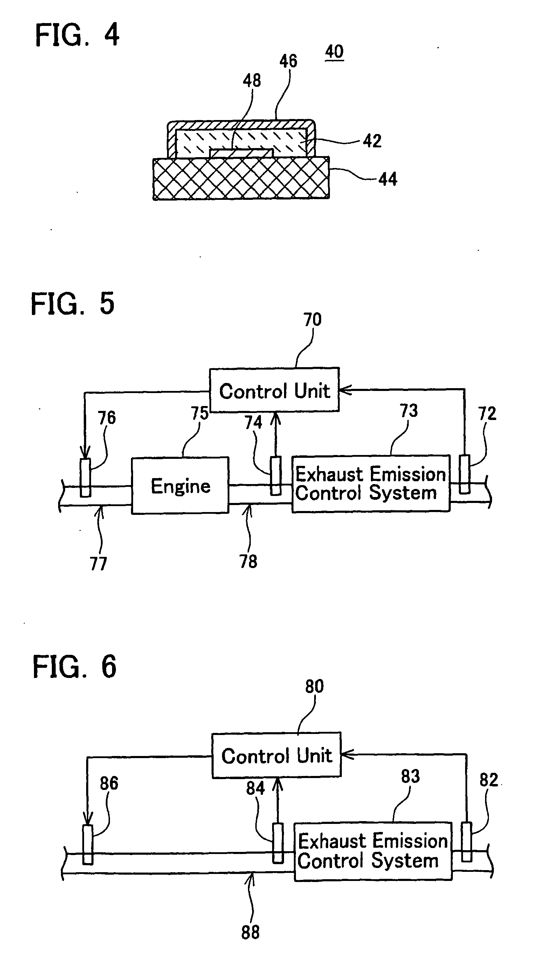

Also, a thin-film gas sensor is described with reference to the drawings. Figure 3 shows an embodiment of a gas sensor disclosed in the present invention. A thin-film gas sensor (gas detection element) 40 comprises a porous substrate corresponding to a gas diffusion rate member (for example a porous alumina substrate) 44, a thin-film inner electrode (for example Pt thin film) 48 formed at the surface of the porous substrate 44, a thin-film solid electrolyte (for example yttria stabilized zirconia film) 42 formed on top of the electrode 48 so as to cover the inner electrode 48, and a thin film outer electrode (for example Pt thin film) 46 formed on the solid electrolyte 42. Terminals 53, 51 for connecting to outside the gas sensor 40 are respectively provided on the inner electrode 48 and outer electrode 46. Also, a sheet-shaped heater 54 is preferably provided at the rear face of the porous substrate 44. The heater 54 is preferably provided with terminals 52A, 52B connected with the outside of the gas sensor 40. The gas sensor 40 can be heated to the desired temperature by the heater 54. Figure 4 is a cross-sectional view showing diagrammatically the relative positional relationship of the major constituent elements of the thin-film gas sensor 40 shown in Figure 3.

In regard to the thin-film gas sensor 40, just as in the case of the measurement device 20 shown in Figure 2 described above, the gas sensor 40 can accurately measure the oxygen concentration, excluding the effect of combustible gas contained in the surrounding gas, by including bismuth in the surface of the Pt particles constituting the outer electrode 46 while including substantially no bismuth in the metal particles constituting the inner electrode 48, the gas sensor 40 can accurately measure of the air-fuel ratio of the surrounding gas. Specifically, the gas sensor 40 can be employed as a limiting current type air-fuel ratio sensor.

Also, by employing a limiting current type gas sensor according to the present invention, various types of control can be performed using the detection signal from the gas sensor.

An embodiment of a gas sensor according to the present invention that is used in a fuel supply system is described with reference to the drawings. Figure 5 shows a fuel supply system in which a gas sensor according to the present invention is employed. In this system, the fuel supplied to an engine is controlled by detecting the air-fuel ratio in the exhaust gas. This system is attached to the engine 75 of for example an automobile. Preferably there are provided one or two or more gas sensors 72, 74 arranged in the exhaust pipe 78 of the engine 75 and a control unit 70 that controls the rate of supply fuel supply to the engine 75 in accordance with the detection signals from the gas sensors 72, 74. In this fuel supply system, the air-fuel ratio of the exhaust gas discharged from the engine 75 is measured by means of a gas sensor 74 arranged on the upstream side of an exhaust emission control system (for example a three-way catalyst) 73 arranged in the exhaust pipe 78 and/or a gas sensor 72 arranged on the downstream side. The control unit 70 ascertains the current air-fuel ratio of the engine 75 from the detection signals that are input from the gas sensors 74, 72. Also, the control unit 70 controls the operation of a fuel addition device (for example a fuel injection system) 76 arranged within the air intake pipe 77 connected with the engine 75 such that the mixture that is supplied to the engine 75 has the desired air-fuel ratio. By means of this system, for example the exhaust emission control system 73 can automatically perform control to the theoretical air-fuel ratio, at which maximum functionality thereof is exhibited. It should be noted that for example the construction of the control unit 70 (microcomputer unit) and the electrical connection means of the control unit 70, the gas sensors 72, 74 and the fuel addition device 76 may be the same as in conventional systems of this type. A detailed description thereof is omitted, since the present invention is not characterized thereby.

An embodiment in which a gas sensor according to the present invention is employed in an exhaust gas purification system is described below with reference to the drawings. Figure 6 shows an exhaust gas purification system employing a gas sensor according to the present invention. This system is arranged in an exhaust gas pipe 88 of the engine of for example an automobile. Preferably the system comprises one or two or more air-fuel ratio sensors 82, 84 arranged in an exhaust pipe 88 of the engine, a reducing agent supply device 86 that supplies reducing agent (such as fuel, urea or ammonia) to the upstream side of the exhaust gas pipe 88, and a control unit 80 that controls the reducing agent supply device 86 in accordance with detection signals from the gas sensors 82, 84. In this exhaust gas purification system, the air-fuel ratio of the exhaust gas discharged from the engine is measured by means of the air-fuel ratio sensor 84 arranged on the upstream side of the exhaust emission control system (reducing medium) 83 arranged in the exhaust pipe 88 and/or the air-fuel ratio sensor 82 arranged on the downstream side. The control unit 80 ascertains the current air-fuel ratio of the exhaust pipe 88 from the detection signals that are input from the gas sensors 84, 82. Also, the control unit 80 controls the operation of the reduction agent addition device 86 such that NOx is properly reduced by the exhaust emission control system 83. By means of this system, the exhaust emission control system 83 can exhibit maximum functionality. It should be noted that the construction of the control unit 80 and the electrical connection means etc of the control unit 80, gas sensors 82, 84 and reduction agent addition device 86 may be the same as in the case of conventional systems of this type. A detailed description thereof is omitted, since the present invention is not characterized thereby.

A comparative example is described with reference to the drawings.

Figure 1(a) shows a gas sensor 10. . In this comparative example, twelve gas sensors 10 of different bismuth rate of the electrode 16 were manufactured.

Specifically, platinum (Pt) electrode forming paste of composition 90 wt% of platinum (Pt) powder and 10 wt% of yttria stabilized zirconia (i.e. excluding organic components such as vehicle) was screen printed onto both faces of yttria stabilized zirconia (ZrO₂ to 6 mol% Y₂O₃: hereinbelow referred to as "YSZ") of thin plate form (diameter 17 mm, thickness 1 mm). After this, platinum electrodes 16, 18 (thickness: 10 µm, area: about 0.5 cm², voidage: about 40%, density: 21.45 g/cm³: platinum mass: about 6.4 mg) formed by sintering platinum particles were formed in thin film form on both faces of the YSZ plate 12 by performing sintering for one hour at 1500 °C.

Next, a suitable quantity (see Table 1) of an aqueous solution of bismuth nitrate of one or other of the concentrations shown in Table 1 was dropped onto the platinum electrode 16. After this, a gas diffusion rate control member 14 constructed of porous alumina of prescribed shape (diameter 17 mm, thickness 0.5 mm) was stuck onto the platinum electrode 16. The gas sensor 10 was then subjected to heat treatment at 800 °C in the air atmosphere. By this method, bismuth (bismuth oxide) was added to the surface of the platinum particles constituting the inner electrode 16.

By the method described above, a total of 12 types of gas sensor 10 (sample 1 to sample 12) shown in Table 1 were manufactured. Table 1 shows the concentration of bismuth nitrate added to the platinum electrode 16, the amount that is dropped thereon, the added amount of bismuth and the bismuth mass rate (i.e. (Bi mass/Pt mass+Bi mass) × 100) with respect to the total mass of metallic elements constituting the electrode in respect of the platinum electrode 16 to which bismuth is added.

**[Table 1]**

| Sample No. | Bismuth nitrate(mol/L) | Amount(µg) | Bi amount(*µ*g) | Bi rate(wt%) | Advantage |
|---|---|---|---|---|---|
| 1 | 0.00001 | 20 | 0.042 | 0.0006 | × |
| 2 | 0.00001 | 50 | 0.104 | 0.0016 | × |
| 3 | 0.0001 | 20 | 0.418 | 0.0065 | O |
| 4 | 0.0001 | 50 | 1.045 | 0.0162 | O |
| 5 | 0.002 | 20 | 8.36 | 0.13 | O |
| 6 | 0.002 | 50 | 20.9 | 0.324 | O |
| 7 | 0.02 | 10 | 41.8 | 0.645 | O |
| 8 | 0.02 | 20 | 83.6 | 1.28 | O |
| 9 | 0.02 | 50 | 209 | 3.14 | O |
| 10 | 0.05 | 50 | 523 | 7.51 | O |
| 11 | 0.05 | 80 | 836 | 11.5 | O(Δ) |
| 12 | 0.05 | 100 | 1045 | 14 | O(Δ) |

Next, the gas sensors 10 of samples 1 to 12 were heated to 700 °C and arranged in an atmosphere of nitrogen (N₂) gas containing 0.1% of oxygen (O₂) (hereinbelow referred to as the "reference inspection gas"), and the limiting current in this atmosphere was found. In addition, the limiting current was found in an atmosphere in which propane (C₃H₈) had been introduced in a concentration of 200 ppm with respect to the reference inspection gas. The cases where the limiting current value in the atmosphere into which 200 ppm of propane had been introduced was at least 80% of the limiting current value in the reference inspection gas atmosphere are indicated in Table 1 by O. In other words, this symbol O indicates cases where addition of bismuth to the inner electrode 16 is effective. Also, cases where the limiting current value in an atmosphere to which 200 ppm of propane have been introduced is less than 80% of the limiting current value in an atmosphere of the reference inspection gas are indicated by the symbol × in Table 1. In other words, this symbol × indicates cases where addition of bismuth to the inner electrode 16 is ineffective. As can be seen from Table 1, in the case of samples 3 to 12, in which the bismuth rate of the inner electrode 16 exceeded 0.0016 wt%, excellent results were obtained, with the limiting current value being unaffected by the combustible gas (propane in this case). In contrast, in the case of samples 11 to 12, in which the bismuth rate of the inner electrode 16 exceeded 10 wt%, the resistance value between the two electrodes 16 and 18 was increased (indicated in the Figure by the symbol Δ). It was therefore recognized the bismuth rate of the inner electrode 16 is suitably about 0.002 to 10 wt% and preferably about 0.01 to 10 wt% in the case where the gas sensor 10 is employed as an oxygen sensor.

A second comparative example will now be described with reference to the drawings.

Figure 2 shows a gas sensor 20. In the second comparative example, laminated type gas sensors (gas concentration measurement devices) 20 as shown in Figure 2 were manufactured.

Specifically, a prescribed electrode pattern was screen-printed on both faces of a YSZ plate 22 of thin plate construction (70 mm × 6 mm × 0.2 mm), using paste for forming platinum electrodes of the composition employed in the first embodiment. The YSZ plate 22 was formed with a gas introduction hole 25A beforehand. Next, the YSZ plate 22 formed with electrodes 26 and 28, an insulating sheet (70 mm × 6 mm × 0.2 mm) having alumina (Al₂O₃) as the primary material and an insulating sheet (70 mm × 6 mm × 2 mm) 32 additionally comprising a heater 34 and having alumina (Al₂O₃) as the primary material were laminated and stuck together. Next, the gas sensor 20 was sintered at about 1500 °C. By this method, a gas sensor 20 provided with a gas introduction hole 25A and an interior space (i.e. space in which the electrode 28 is arranged) 25 as shown in Figure 2 was manufactured.

Next, an aqueous solution of bismuth nitrate of 0.002 mol/L was injected into the space 25. Next, heat treatment of the gas sensor 20 was performed at 850 °C thereby introducing a bismuth onto the surface of the platinum particles forming the inner electrode 28. The bismuth rate was 0.82 wt%. Next, a gas diffusion rate control member 24 made of porous alumina of prescribed shape (6 mm × 5 mm × 0.3 mm) was stuck on at a position blocking the gas introduction hole 25A in the surface of the YSZ plate 22.

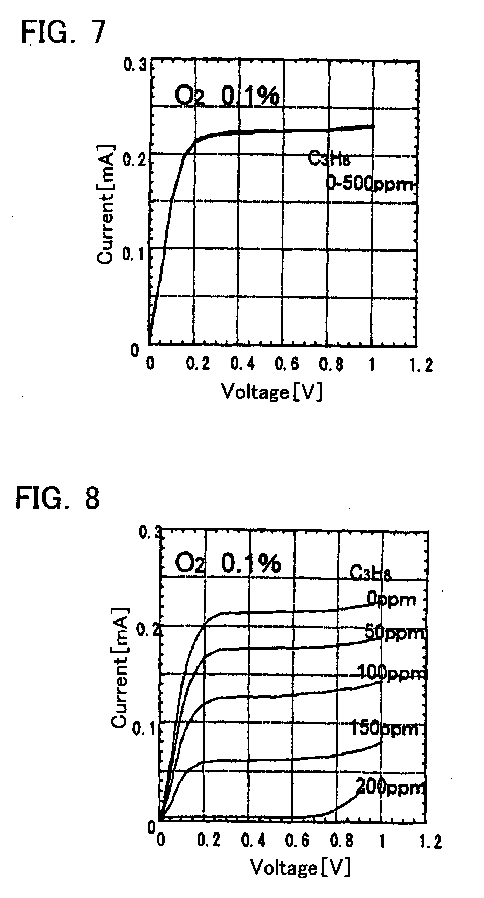

Tests of detection of gas concentration were performed using the gas sensors 20 obtained by the above method. Specifically, the gas sensor 20 was heated to 700 °C and arranged in a reference inspection gas atmosphere and the limiting current measured. Next, propane was introduced into the reference inspection gas. The propane was introduced at concentrations of 50, 100, 150 and 200 ppm with respect to the reference inspection gas and the limiting current at these respective propane concentrations was found. As further comparative examples, gas sensors 20 were manufactured containing no bismuth in the electrodes 26 and 28 and tests were conducted in the same way with these gas sensors 20. The results are shown in Figure 7 and Figure 8. Figure 7 is a graph showing the gas concentration detection characteristic (current-voltage characteristic) of a gas sensor 20 containing bismuth in the inner electrode 28. Figure 8 is a graph showing the gas concentration detection characteristic of a gas sensor 20 containing no bismuth in the electrodes 26, 28.

As is clear from the graph of Figure 8, in the case of a gas sensor 20 containing no bismuth in the electrode 26, 28, the limiting current value becomes smaller as the propane concentration is increased. This is because the oxygen of the space 25 is consumed by reaction of the propane with the oxygen, due to the catalytic action of the platinum particles constituting the electrode 28.

As is clear from the graph of Figure 7, by suppressing the catalytic action of the platinum particles constituting the inner electrode 28 by means of the presence of bismuth at the surface of the platinum particles constituting the inner electrode 28, even though the bismuth rate is extremely low, a constant limiting current is always obtained irrespective of the concentration of propane in the reference inspection gas.

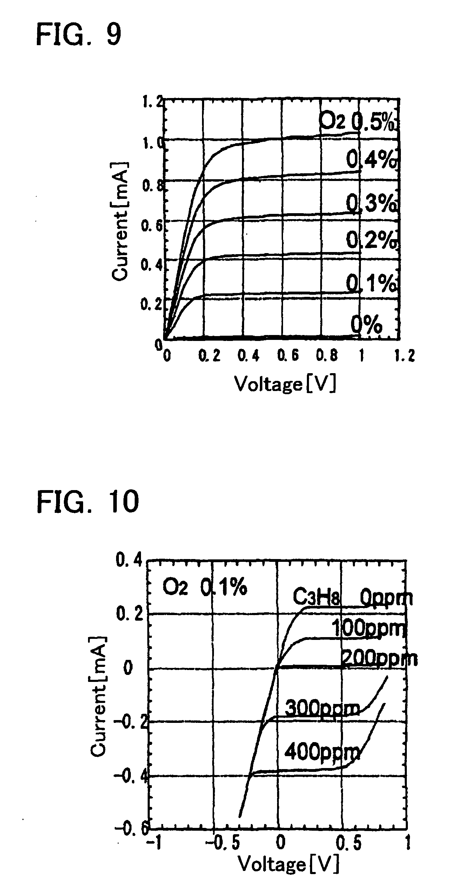

In addition, the performance of the gas sensors 20 containing bismuth in the inner electrodes 28 was evaluated by varying the concentration of oxygen with respect to the reference inspection gas. As shown in Figure 9, the limiting current of the gas sensors 20 changes in response to change of concentration of the oxygen (0 to 0.5%). Specifically, it was verified that the gas sensors 20 have performance that is desirable for an oxygen sensor. It was confirmed that the gas sensors 20 are capable of accurately detecting the oxygen concentration of an atmosphere in which combustible gas is present (for example exhaust gas), without being affected by this combustible gas.

In addition, comparative gas sensors 20 (Sample A to sample C) were manufactured containing bismuth in the inner electrode 28 and outer electrode 26, by the same method as in the case of the first embodiment (method of dropping an aqueous solution of bismuth nitrate thereon). The bismuth rates of the inner electrode 28 and outer electrode 26 of the samples A to C are shown in Table 2. A durability test (accelerated test) was then conducted by heating the gas sensors 20 of samples A to C to 900 °C and conducting operation for 200 hours. The bismuth rate of the inner electrode 28 and the outer electrode 26 of samples A to C after the durability test was then examined. The results are shown in Table 2.

**[Table 2]**

| | Before Durability test Bi rate(wt%) | After Durability test Bi rate(wt%) | Bi reduction rate(%) |
|---|---|---|---|
| Inner electrode | | | |
| Sample A | 0.82 | 0.71 | 13.4 |
| Sample B | 0.82 | 0.73 | 11.0 |
| Sample C | 0.82 | 0.69 | 15.8 |

| Outer electrode | | | |
|---|---|---|---|
| Sample A | 1.21 | 0.91 | 24.8 |
| Sample B | 1.25 | 1.00 | 20.0 |
| Sample C | 1.42 | 1.05 | 26.0 |

As can be seen from Table 2, in the results of the durability test, the reduction rate (loss rate) of bismuth of the electrodes is largest in the case of the outer electrode 26. The rate of reduction of bismuth of the outer electrode 26 was 1.76 times the rate of reduction of bismuth of the inner electrode 28 (average of the three samples). This result shows that the rate of vaporization of bismuth is different as between the inner electrode 28, which is arranged in a zone where gas diffusion is restricted by the gas diffusion rate control member 22 and the outer electrode 26, which is arranged in a zone where it is unaffected by the gas diffusion rate control member 22.

An evaluation was also conducted of the properties of a gas sensor 20 of the laminated type according to the present invention manufactured so as to contain bismuth only in the outer electrode 26 but to contain no bismuth in the inner electrode 28. Specifically, in the gas sensors 20 of the comparative examples described above (gas concentration measurement device) bismuth was introduced onto the surface of the platinum particles constituting the outer electrode 26 by adding an aqueous solution of bismuth nitrate to the surface of the outer electrode 26 by the same method as in the case of the first comparative example described above and then conducting heat treatment. The bismuth rate of the outer electrode 26 was about 1.2 wt%.

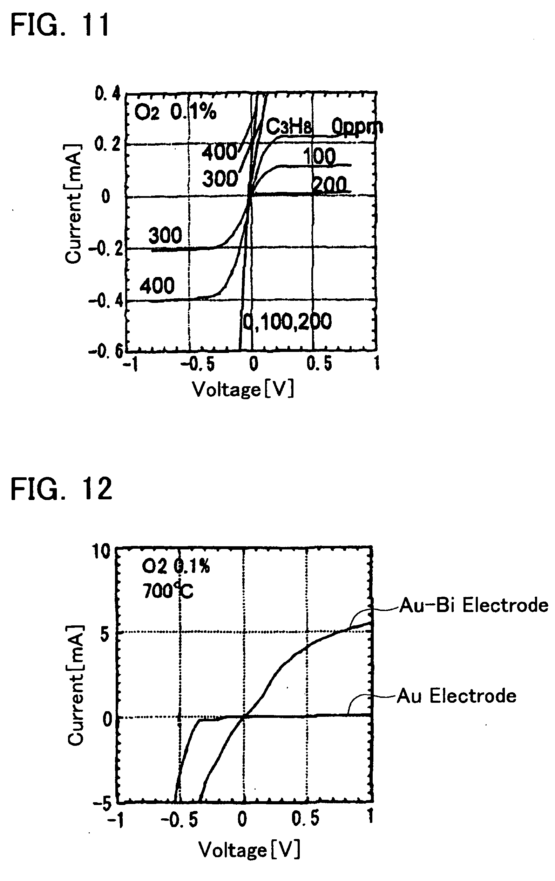

Next, a test of detection of gas concentration was conducted using the gas sensor 20 that was thus obtained. Specifically, the gas sensor 20 was heated to 700 °C and arranged in an atmosphere of reference inspection gas and the limiting current measured. Next, propane was introduced into the reference inspection gas. Propane was introduced into the reference inspection gas so as to produce the concentrations of 100, 200, 300, 400 ppm and the limiting currents at the respective propane concentrations were found. As comparative examples, gas sensors 20 were manufactured containing no bismuth in the electrodes 26 and 28 and the same tests conducted as in the case of the previously mentioned gas sensor 20. The results are shown in Figure 10 and Figure 11. Figure 10 is a graph showing the detection characteristic (current-voltage characteristic) of a gas sensor 20 containing bismuth in the outer electrode 26. Figure 11 is a graph showing the detection characteristic of a gas sensor 20 containing no bismuth in the electrodes 26 and 28.

As can be seen from Figure 11, in the case of a gas sensor 20 containing no bismuth in the electrodes 26, 28, limiting current was obtained in the first quadrant in lean atmosphere. Also, limiting current was obtained in the third quadrant in rich atmosphere. In contrast, as is clear from Figure 10, in the case of the gas sensor 20 containing bismuth in the electrode 26, limiting current was obtained in the first quadrant in lean atmosphere. Also, limiting current was obtained in the fourth quadrant in rich atmosphere. It was thereby confirmed that, in a gas sensor 20 of the limiting current type according to the present invention including bismuth in the electrode 26, according to this embodiment, by for example applying voltage of 0.3 to 0.5 V, the air-fuel ratio of the gas to be measured can be measured continuously from a lean air-fuel ratio to a rich air-fuel ratio. Such a characteristic could conventionally only be obtained with an air-fuel ratio sensor of the so-called external atmosphere introduction type (in which the gas sensor needs to be provided with an external atmosphere chamber). By employing an air-fuel ratio sensor such as is provided according to the present invention, the air-fuel ratio can be accurately measured even though a simple construction is adopted in which the two electrodes are arranged in the same atmosphere without introducing external atmosphere (i.e. without requiring the provision of an external atmosphere chamber in the gas sensor).

A third comparative example will now be described.

In the third comparative example, a gas sensor structural component 110 as shown in Figure 1(b) is manufactured in which the gas diffusion rate control member 14 is removed from the gas sensor shown in Figure 1(a) and the material of the electrode 16 is altered and the gas sensor is used to measure oxygen gas pump performance.

Specifically, screen printing was performed using paste for platinum electrode formation of the composition employed in the first embodiment on one surface of a YSZ plate 12 formed as a thin plate (diameter 17 mm, thickness 1 mm) and sintered at 1500 °C. Next, screen printing was performed using paste for gold (Au) electrode formation of composition: gold (Au) powder 90 wt%, yttria stabilized zirconia 10 wt% (excluding organic constituents such as vehicle), on the other surface of the YSZ plate 12. After this, sintering was conducted for 1 hour at 1000 °C, thereby sintering the Pt particles at the one surface of the YSZ plate 12 to form a thin film Pt electrode 18 and sintering the Au particles at the other surface of the YSZ plate 12 to form a thin film Au electrode 16.

In addition 10 µL of an aqueous solution of bismuth nitrate of 0.02 mol/L was dropped onto the Au electrode 16. The bismuth rate of the Au electrode 16 was 0.65 wt%.

After dropping the aqueous solution of bismuth nitrate thereon, the structural component 110 was subjected to heat treatment at 850 °C. In addition, current passage treatment was performed in a nitrogen gas containing 1% H₂ in order to achieve rich bismuth at the outer surfaces and poor or no bismuth within the interior of the metal particles of the Au electrode 16. Also, for purposes of comparison, a structural component 110 of the same shape but whose Au electrode 16 contained no bismuth was manufactured.

Next, the aforesaid structural components 110 were heated to 700 °C and the oxygen pumping performance of the Au electrode 16 in reference inspection gas was evaluated. As can be seen from the results shown in Figure 12, scarcely any current flowed in the structural component 110 wherein no bismuth had been added to the Au electrode 16 and it appeared that there was scarcely any ionization of O₂ at the surface of this Au electrode 16. In contrast, in the case of the structural component 110 wherein bismuth had been added to the Au electrode 16, as current is increasing with voltage, so ionization of O₂ proceeded at the surface of the Au electrode 16, and it was thus confirmed that the oxygen pumping performance was improved.

A fourth comparative example will now be described. A gas sensor 10 was manufactured differing from the gas sensor 10 shown in Figure 1(a) solely in respect of the material of the inner electrode 16. The steps for forming the gas sensor 10 were the same as in the case of the first or third comparative example and a description thereof is therefore omitted. Five types of inner electrode 16 as shown below were prepared:
(1) inner electrode made of metal particles having platinum as the primary material;
(2) inner electrode obtained by dropping 20 µL of an aqueous solution of bismuth nitrate of 0.02 mol/L onto metal particles having consisting of platinum as the primary material;
(3) inner electrode obtained by dropping 20 µL of an aqueous solution of bismuth nitrate of 0.02 mol/L onto an electrode containing 90 wt% of metal particles having gold as the primary material and 10 wt% of metal particles having platinum as the primary material;
(4) inner electrode obtained by dropping 20 µL of an aqueous solution of bismuth nitrate of 0.02 mol/L onto an electrode containing 97 wt% of metal particles having gold as the primary material and 3 wt% of metal particles having platinum as the primary material; and
(5) inner electrode obtained by dropping 20 µL of an aqueous solution of bismuth nitrate of 0.02 mol/L onto metal particles having gold as the primary material.

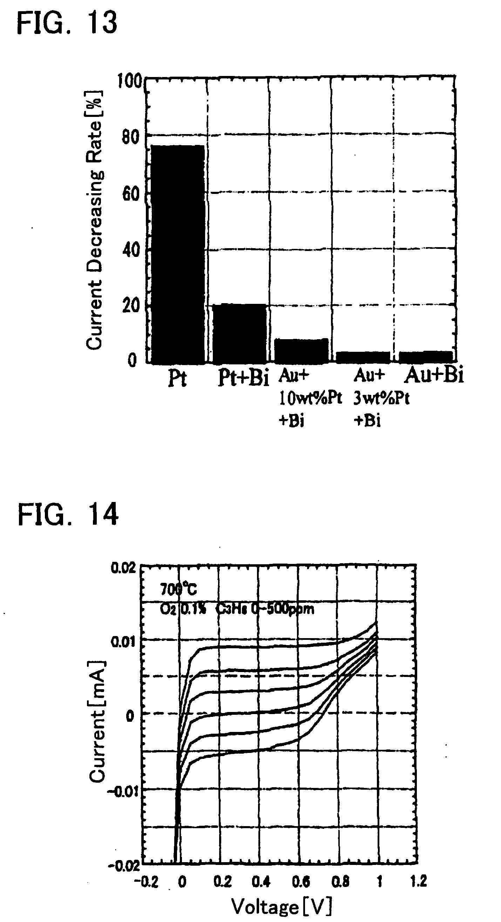

The limiting current value was measured when voltage of 0.6 V was applied using sensors (1) to (5) according to the present comparative example obtained as above in an atmosphere of reference inspection gas and an atmosphere containing 0.05% hydrogen (H₂) in reference inspection gas. In the graph shown in Figure 13, the vertical axis shows the current decreasing rate i.e. ((the limiting current value when voltage of 0.6 V was applied in reference inspection gas) - (the limiting current value when voltage of 0.6 V was applied in an atmosphere containing 0.05% H₂ in reference inspection gas) / (the limiting current value when voltage of 0.6 V was applied in reference inspection gas)) × 100 and the horizontal axis shows the material of the inner electrode 16. This graph shows that, the smaller the value of the vertical axis, the lower is the catalytic effect of the inner electrode 16 and the better is the detection performance of the gas sensor 10. From the results of Figure 13, it was confirmed that the current decreasing rate was large only in the case where the inner electrode 16 was made of platinum and the current decreasing rate was reduced by addition of bismuth. Also, it was confirmed that the higher the proportion of gold, the smaller was the current decreasing rate.

From Figure 13, it can be seen that the higher the proportion of gold, the smaller is the current decreasing rate and the higher is the detection capability of the gas sensor 10. Contrariwise, adhesion of the solid electrolyte 12 and inner electrode 16 can be raised if only a small quantity of metal particles having platinum and/or palladium as the primary material is mixed therewith. If the rate of metal particles having platinum and/or palladium as the primary material is 10 wt% or less, as shown in Figure 13, the current decreasing rate can be suppressed to within the allowed range and the adhesion of the solid electrolyte 12 and inner electrode 16 can be raised.

A further embodiment of the present invention will now be described.

Thin-film gas sensors 40 as shown in Figure 3 were manufactured. Specifically, porous alumina substrates (30 mm × 30 mm × 0.3 mm) 44 were prepared as gas diffusion rate control members. A gas sensor 40 was formed by successively laminating a platinum electrode (inner electrode) 48, YSZ electrolyte film 42 and platinum electrode (outer electrode) 46 onto an alumina substrate 44, using the ordinary sputtering method employing an RF sputtering device and a suitable target material. An interior heater 54 made of platinum was formed by the same technique on the rear face side of the alumina substrate 44. After this, single gas sensors were obtained by slicing to 3 × 3 mm. Thin-film gas sensors 40 were then manufactured by connecting the necessary components such as platinum lead terminals 51, 53, 52A and 52B for connection to outside the gas sensor 40. Heat treatment was then conducted at 850 °C in an oxidizing atmosphere, after dropping a suitable quantity of an aqueous solution of bismuth nitrate of 0.002 mol/L onto the platinum electrodes 46. By this method, the platinum particles constituting the platinum electrode film 46 contained rich bismuth (bismuth oxide) at their outer surfaces and contained poor or no bismuth within the interior of the platinum particles.

A test was then conducted of detecting gas concentration using the gas sensors 40. Specifically, these gas sensors 40 were heated to 700 °C using the interior heaters 54 and arranged in the reference inspection gas, and the limiting currents thereof were measured. Next, propane was introduced into the reference inspection gas. The propane was introduced in concentrations of 100, 200, 300, 400 and 500 ppm with respect to the reference inspection gas, and the limiting currents were found at these respective propane concentrations. The results are shown in Figure 14. A total of six oxygen detection curves (current-voltage characteristics) are shown in the Figure, for propane concentrations of 0, 100, 200, 300, 400 and 500 ppm with respect to the reference inspection gas, in that order from the top.

As can be seen from Figure 14, in the case of thin-film gas sensors 40 containing bismuth in the outer electrode 46, the limiting current was obtained in the first quadrant in the case of the lean atmosphere. Also, in the case of the rich atmosphere, the limiting current was obtained in the fourth quadrant. It was thereby confirmed that continuous measurement of the air-fuel ratio of the gas to be measured from lean atmosphere to rich atmosphere could be achieved using a compact device construction, without needing to introduce external atmosphere, by applying voltage of for example 0.3 to 0.5 V as in the present embodiment, using a limiting current type gas sensor 40 of thin film type containing bismuth in the outer electrode 46.

Next, using the same technique as in the case of the thin-film gas sensors described above, thin-film gas sensors were manufactured by using a multi-element sputtering device to form respectively mixed electrode layers consisting of a mixture of platinum and YSZ between a platinum electrode (inner electrode) and YSZ thin film and between a YSZ thin film and platinum electrode (outer electrode). Heat treatment was then conducted at 850 °C in an oxidizing atmosphere, after dropping a suitable quantity of an aqueous solution of bismuth nitrate of 0.002 mol/L onto the platinum electrode film (outer electrode) of the topmost layer. By this method, the platinum particles constituting the platinum electrode film (outer electrode) contained rich bismuth (bismuth oxide) at their outer surfaces and contained poor or no bismuth within the interior of the platinum particles.

A test was then conducted of detecting gas concentration in the same way as described above using the thin-film gas sensors with mixed electrode layers, the gas sensors being heated to 550 °C using the interior heaters. As a result, it was found that the limiting current was obtained in the first quadrant in the case of the lean atmosphere and, in the case of the rich atmosphere, the limiting current was obtained in the fourth quadrant. That is, it was thereby confirmed that continuous measurement of the air-fuel ratio of the gas to be measured from lean atmosphere to rich atmosphere could be achieved using a compact device construction, without needing to introduce external atmosphere, using a gas sensor according to the present invention comprising a mixed electrode layer, by applying a fixed voltage (for example 0.3 to 0.5 V), even under low temperature conditions.

A further embodiment of the present invention will now be described.

Thin-film gas sensors 40 as shown in above embodiment were manufactured in which the outer electrode 46 was formed of metal particles having gold as the primary material, containing rich bismuth at their outer surfaces and poor or no bismuth within the interior of the gold particles.

Separately, thin-film gas sensors 40 were manufactured having outer electrodes 46 containing 97 wt% of metal particles having gold as the primary material and 3 wt% of metal particles having platinum as the primary material, containing rich bismuth at their outer surfaces and poor or no bismuth within the interior of these metal particles. The steps for manufacturing the gas sensor 40 were the same as in the case of the above embodiment and a description thereof is therefore omitted.

Tests of detection of gas concentration were conducted using the two types of thin-film sensors 40 obtained. Specifically, these thin-film gas sensors 40 were heated to 700 °C using the heaters 54 and arranged in isobutane combustion exhaust gas, and the respective limiting currents were found when the air excess ratio λ (measured air-fuel ratio of atmosphere/theoretical air-fuel ratio) was 1.2, 1.1, 1.0 or 0.9.

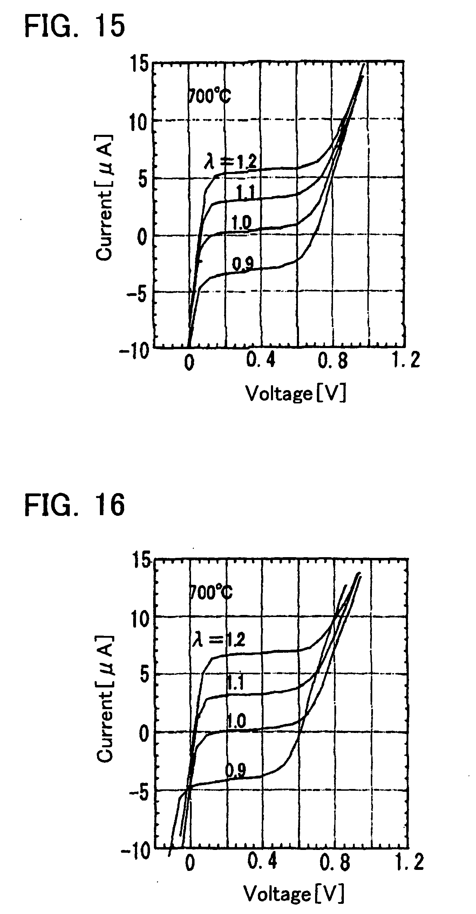

Figure 15 shows the oxygen gas detection characteristic curves of the gas sensors formed using outer electrodes 46 formed of gold; Figure 16 shows the oxygen gas detection curves of gas sensors in which the outer electrode 46 was formed using gold particles (97 wt%) and platinum particles (3 wt%). The oxygen detection curves of Figure 15 and Figure 16 were curves obtained using air excess ratios λ of 1.2, 1.1, 1.0 and 0.9, respectively in order from the top.

As can be seen from Figure 15, in the case of the thin-film sensors 40 wherein the external electrode 46 was formed of gold particles containing rich bismuth at their outer surfaces and poor or no bismuth within the interior of these gold particles, the limiting current was obtained in the first quadrant in the case of the lean atmosphere and the limiting current was obtained in the fourth quadrant in the case of the rich atmosphere. It was thereby confirmed that continuous measurement of the air-fuel ratio of the gas to be measured from lean atmosphere to rich atmosphere could be achieved using a compact device construction, without needing to introduce external atmosphere, using a limiting current type gas sensor of the thin film type according to the present invention containing bismuth in the outer electrode 46, by applying a voltage of for example 0.2 to 0.6 V, as in the present embodiment.

Also, as can be seen from Figure 16, in the case of a thin-film gas sensor 40 wherein the metal particles forming the outer electrode 46 were formed by gold particles (97 wt%) and platinum particles (3 wt%) containing rich bismuth at the outer surfaces of these metal particles and poor or no bismuth within the interior of these metal particles, the limiting current was obtained in the first quadrant in the case of the lean atmosphere and the limiting current was obtained in the fourth quadrant in the case of the rich atmosphere. It was thereby confirmed that continuous measurement of the air-fuel ratio of the gas to be measured from lean atmosphere to rich atmosphere could be achieved using a compact device construction, without needing to introduce external atmosphere, using a limiting current type gas sensor of the thin film type according to the present invention containing bismuth in the outer electrode 46, by applying a voltage of for example 0.2 to 0.4 V, as in the present embodiment.

For example, in the above embodiments, bismuth was added to the electrodes by dropping an aqueous solution of a bismuth compound onto the outer electrode of a gas sensor. However, there is no restriction to this method. For example, bismuth could be added quantitatively to the surface of the platinum or other metal particles constituting the outer electrode by sputtering using a Bi target (for example simultaneous sputtering of Bi and Pt) when forming the electrodes.

## Claims

1. A gas sensor (20, 40) comprising:
a solid electrolyte (22, 42) having oxygen ion conductivity;
a gas diffusion rate control member (24, 44) for controlling a diffusion rate of a surrounding gas;
an inner electrode (28, 48) arranged at a surface of the solid electrolyte (22, 42) within an inner space covered by the gas diffusion rate control member (24, 44); and
an outer electrode (26, 46) arranged at a surface of the solid electrolyte (22, 42) outside the inner space, wherein
the inner electrode (28, 48) is made of metal particles, the primary material of the metal particles being at least one metal element selected from a group consisting of metals belonging to platinum group, gold, silver and nickel, and
the outer electrode (26, 46) is made of metal particles, wherein the primary material of the metal particles is at least one metal element selected from a group consisting of metals belonging to platinum group, gold silver and nickel,
only the metal particles forming the outer electrode (26, 46) contain bismuth, and
a bismuth rate of a surface portion of the metal particles is higher than a bismuth rate of an inner central portion of the metal particles.

2. The gas sensor as defined in claim 1, wherein the content rate of bismuth in the outer electrode (26, 46) is between 0.1 wt% and 15 wt% of the total mass of the metal elements that constitute the outer electrode (26, 46).

3. The gas sensor as defined in claim 1 or 2, wherein the outer electrode (26, 46) is made of metal particles having platinum as the primary material.

4. The gas sensor as defined in claim 1 or 2, wherein the outer electrode (26, 46) is made of metal particles having gold as the primary material.

5. The gas sensor as defined in claim 1 or 2, wherein:
the outer electrode (26, 46) is made of metal particles having gold as the primary material and of metal particles having platinum and/or palladium as the primary material; and
the content rate of platinum and/or palladium is 10 wt% or less of the total mass of the metal elements that constitute the outer electrode (26, 46).

6. A combination of the gas sensor (20, 40) as defined in any one of claims 1 to 5 and a processing unit (70, 80) for processing a signal transmitted from the gas sensor (20, 40).

7. Use of a gas sensor as defined in any one of claims 1 to 5, comprising:
detecting an air-fuel ratio of exhaust gas from an engine (75) with said gas sensor (20, 40) and
controlling a reducing agent supplying device (86) and/or a fuel injection device (76), wherein the reducing agent supplying device (86) is arranged within an exhaust gas passage (88) of the engine (75), and the fuel injection device (76) is arranged within an air intake pipe (77) connected with the engine (75).

## Patentansprüche

1. Gassensor (20, 40), umfassend:
einen Festelektrolyten (22, 42) mit einer Sauerstoffionenleitfähigkeit,
ein Gasdiffusionsratensteuerelement (24, 44) zum Steuern einer Diffusionsrate eines umgebenden Gases,
eine Innenelektrode (28, 48), die an einer Oberfläche des Festelektrolyten (22, 42) innerhalb eines Innenraums angeordnet ist, der von dem Gasdiffusionsratensteuerelement (24, 44) bedeckt ist, und
eine Außenelektrode (26, 46), die an einer Oberfläche des Festelektrolyten (22, 42) außerhalb des Innenraums angeordnet ist, wobei
die Innenelektrode (28, 48) aus Metallteilchen hergestellt ist, wobei das Primärmaterial der Metallteilchen mindestens ein Metallelement ist, das aus einer Gruppe ausgewählt ist, die aus Metallen, die zur Platingruppe gehören, Gold, Silber und Nickel besteht, und
die Außenelektrode (26, 46) aus Metallteilchen hergestellt ist, wobei das Primärmaterial der Metallteilchen mindestens ein Metallelement ist, das aus einer Gruppe ausgewählt ist, die aus Metallen, die zur Platingruppe gehören, Gold, Silber und Nickel besteht,
wobei nur die Metallteilchen, welche die Außenelektrode (26, 46) bilden, Bismut enthalten, und
der Bismutanteil eines Oberflächenabschnitts der Metallteilchen höher ist als der Bismutanteil eines inneren, zentralen Abschnitts der Metallteilchen.

2. Gassensor nach Anspruch 1, bei dem der Gehaltsanteil von Bismut in der Außenelektrode (26, 46) zwischen 0,1 Gew.-% und 15 Gew.-% der Gesamtmasse der Metallelemente beträgt, welche die Außenelektrode (26, 46) bilden.

3. Gassensor nach Anspruch 1 oder 2, bei dem die Außenelektrode (26, 46) aus Metallteilchen hergestellt ist, die Platin als das Primärmaterial aufweisen.

4. Gassensor nach Anspruch 1 oder 2, bei dem die Außenelektrode (26, 46) aus Metallteilchen hergestellt ist, die Gold als das Primärmaterial aufweisen.

5. Gassensor nach Anspruch 1 oder 2, bei dem
die Außenelektrode (26, 46) aus Metallteilchen, die Gold als das Primärmaterial enthalten, und aus Metallteilchen, die Platin und/oder Palladium als das Primärmaterial enthalten, hergestellt ist, und
der Gehaltsanteil von Platin und/oder Palladium 10 Gew.-% oder weniger der Gesamtmasse der Metallelemente beträgt, welche die Außenelektrode (26, 46) bilden.

6. Kombination aus dem Gassensor (20, 40) nach einem der Ansprüche 1 bis 5 und einer Verarbeitungseinheit (70, 80) zum Verarbeiten eines Signals, das von dem Gassensor (20, 40) übertragen worden ist.

7. Verwendung eines Gassensors nach einem der Ansprüche 1 bis 5, umfassend:
Erfassen eines Luft-Kraftstoff-Verhältnisses eines Abgases von einem Motor (75) mit dem Gassensor (20, 40) und
Steuern einer Reduktionsmittelzuführungsvorrichtung (86) und/oder einer Kraftstoffeinspritzvorrichtung (76), wobei die Reduktionsmittelzuführungsvorrichtung (86) innerhalb einer Abgasleitung (88) des Motors (75) angeordnet ist und die Kraftstoffeinspritzvorrichtung (76) innerhalb eines Luftansaugrohrs (77), das mit dem Motor (75) verbunden ist, angeordnet ist.

## Revendications

1. Détecteur de gaz (20, 40) comprenant :
un électrolyte solide (22, 42) présentant une conductivité d'ions d'oxygène ;
un élément de commande de vitesse de diffusion de gaz (24, 44) pour commander une vitesse de diffusion d'un gaz environnant ;
une électrode interne (28, 48) ménagée sur une surface de l'électrolyte solide (22, 42) à l'intérieur d'un espace interne recouvert de l'élément de commande de vitesse de diffusion de gaz (24, 44) ; et
une électrode externe (26, 46) ménagée sur une surface de l'électrolyte solide (22, 42) à l'extérieur de l'espace interne, dans laquelle
l'électrode interne (28, 48) est constituée de particules métalliques, le matériau primaire des particules métalliques étant au moins un élément métallique sélectionné dans un groupe constitué de métaux appartenant au groupe du platine, de l'or, de l'argent et du nickel, et
l'électrode externe (26, 46) est constituée de particules métalliques, dans laquelle le matériau primaire des particules métalliques est au moins un élément métallique sélectionné dans un groupe constitué de métaux appartenant au groupe du platine, de l'or, de l'argent et du nickel,
seules les particules métalliques formant l'électrode externe (26, 46) contiennent du bismuth, et
un taux de bismuth d'une portion de surface des particules métalliques est supérieur à un taux de bismuth d'une portion centrale interne des particules métalliques.

2. Détecteur de gaz selon la revendication 1, dans lequel la teneur en bismuth dans l'électrode externe (26, 46) est de 0,1 % en poids et de 15 % en poids de la masse totale des éléments métalliques qui constituent l'électrode externe (26, 46).

3. Détecteur de gaz selon la revendication 1 ou 2, dans lequel l'électrode externe (26, 46) est constituée de particules métalliques contenant du platine comme matériau principal.

4. Détecteur de gaz selon la revendication 1 ou 2, dans lequel l'électrode externe (26, 46) est constituée de particules métalliques contenant de l'or comme matériau principal.

5. Détecteur de gaz selon la revendication 1 ou 2, dans lequel :
l'électrode externe (26, 46) est constituée de particules métalliques contenant de l'or comme matériau primaire et de particules métalliques contenant du platine et/ou du palladium comme matériau principal ; et
la teneur en platine et/ou en palladium représente 10 % en poids ou moins de la masse totale des éléments métalliques qui constituent l'électrode externe (26, 46).

6. Combinaison du détecteur de gaz (20, 40) selon l'une quelconque des revendications 1 à 5 avec une unité de traitement (70, 80) pour traiter un signal transmis par le détecteur de gaz (20, 40).

7. Utilisation d'un détecteur de gaz selon l'une quelconque des revendications 1 à 5, comprenant les étapes consistant à :
détecter un rapport air-combustible d'un gaz d'échappement émis par un moteur (75) en utilisant ledit détecteur de gaz (20, 40) et
commander un dispositif d'alimentation d'agent de réduction (86) et/ou un dispositif d'injection de combustible (76), le dispositif d'alimentation d'agent de réduction (86) étant ménagé à l'intérieur d'un passage du gaz d'échappement (88) du moteur (75), et le dispositif d'injection de combustible (76) étant ménagé à l'intérieur d'un tuyau d'admission d'air (77) raccordé au moteur (75).
